# EUROPÄISCHE PATENTSCHRIFT

(11) **EP 1 445 031 B1**
(45) Veröffentlichungstag und Bekanntmachung des Hinweises auf die Patenterteilung: **08.10.2008**
(21) Anmeldenummer: 04011323.5
(22) Anmeldetag: 02.08.2001
(51) Int. Cl.: B05C 5/02, B25J 19/02

(54) **Einrichtung zum Aufbringen von Klebstoff auf ein Werkstück**
Device for applying adhesive to a workpiece
Appareil pour l'application de colle sur une pièce

(30) Priorität: 29.09.2000 DE 10048749
(43) Veröffentlichungstag der Anmeldung: 11.08.2004
(62) Teilanmeldung aus: 01965162.9
(73) Patentinhaber: Schucker, Josef, 76227 Karlsruhe (DE)
(72) Erfinder: Schucker, Josef, 76227 Karlsruhe (DE)
(74) Vertreter: Wolf, Eckhard

(56) Entgegenhaltungen:
- EP-B- 0 576 498
- DE-A1- 3 243 341
- DE-A1- 3 506 110
- DE-T2- 69 410 684
- FR-A- 2 741 438
- US-A- 4 724 302
- US-A- 4 916 286
- US-A- 5 402 351
- US-A- 5 532 452
- US-A- 5 533 146
- US-A- 5 932 062

## Beschreibung

Die Erfindung betrifft eine Einrichtung zum Aufbringen von Klebstoff auf ein Werkstück mit einem mit dem viskosen Klebstoff unter Druck beaufschlagbaren, eine Auftragsdüse aufweisenden Düsenkopf, wobei der Düsenkopf und das Werkstück mittels einer Roboteranordnung so relativ zueinander bewegbar sind, daß der vorzugsweise in einem Sprühstrahl aus der Auftragsdüse austretende Klebstoff in Form eines Klebstoffstreifens entlang einer vorgegebenen Auftragsbahn auf das Werkstück applizierbar ist, wobei sich am Düsenkopf oder am zugehörigen Roboterglied eine mit ihrem Objektiv auf den Sprühstrahl oder den Klebstoffstreifen gerichtete, ausgangsseitig an eine Bildauswerteeinheit angeschlossene Kameraeinheit zur Erzeugung von Bilddaten des Klebestreifens angeordnet ist. Im folgenden sollen unter dem Begriff "Klebstoff" auch andere viskose Stoffe, wie Dichtstoffe, verstanden werden, die über eine Auftragsdüse in viskoser Form auf ein Werkstück aufgetragen werden.

Beim Auftrag von Klebstoffen ist es bekannt, den viskosen Klebstoff ohne oder mit Luftunterstützung in Form eines Klebstoffstrangs entlang der Auftragsbahn auf das Werkstück aufzutragen. Weiter ist es bekannt, einen aus einer Auftragsdüse austretenden Klebstofffaden nach dem Wirbelstromprinzip mit Hilfe von Druckgas auszulenken und zu verwirbeln und auf diese Weise einen schleifenartig gelegten, partiell offenen Massestreifen definierter Breite auf das Werkstück aufzutragen (EP 0576498 B1). Mit den dortigen Maßnahmen wurde auch der Erkenntnis Rechnung getragen, daß je nach Viskosität oder Steifheit des Klebstoffs ein mehr oder weniger zäher Klebstofffaden mit gleichbleibendem Mengenstrom aus der Auftragsdüse des Düsenkopfs austritt und daß man andererseits je nach Zähigkeit dieses Fadens einen mehr oder weniger großen Gasstrom benötigt, um den Faden definiert auszulenken und zu einer definierten Streifenbreite zu gelangen.

Dazu wird ein von der Viskosität abhängiger Parameter der pastösen Masse gemessen und die in der Zeiteinheit zugeführte Druckgasmenge in funktioneller Abhängigkeit von dem gemessenen Viskositätsparameter so gesteuert, daß ein Massestreifen von gleichbleibender Breite entlang dem Werkstück aufgesprüht wird. Als viskositätsabhängige Parameter kommen in Betracht der Förderdruck der pastösen Masse, die Temperatur der pastösen Masse und der Antriebsdruck bzw. die Antriebsleistung einer Dosiervorrichtung für die pastöse Masse. Bei der viskositätsabhängigen Druckgaszufuhr handelt es sich um eine steuerungstechnische Maßnahme, die einen erheblichen Kalibrieraufwand erfordert. Vor allem bei einer Änderung von Applikationsparametern, bei Änderung des Roboterprogramms oder bei einer Änderung des Klebers oder der Bauteiloberfläche sind Nachkalibrierungen erforderlich, die recht zeitaufwendig sein können.

Um diesen Nachteil zu vermeiden, wird bei einer Einrichtung der eingangs angegebenen Art (US-A-4,724,302) der Klebstoffstreifen entlang der Auftragsbahn unter Erzeugung von Bilddaten, die in einer Bildauswerteeinheit ausgewertet werden, optisch überwacht.

Der Erfindung liegt die Aufgabe zugrunde, die bekannte Einrichtung der eingangs angegebenen Art dahingehend zu verbessern, dass eine lückenlose Bilddarstellung entlang der Auftragsbahn ermöglicht wird und dass der Kalibriervorgang beim Klebstoffauftrag automatisiert durchgeführt werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass die Bildauswerteanordnung einen Istwertspeicher zur fortlaufenden Abspeicherung der gemessenen Bilddaten sowie einen mit dem Istwertspeicher synchronisierbaren Weg- oder Impulsgeber entlang der Auftragsbahn aufweist. Vorteilhafterweise weist die Bildauswerteanordnung einen an vorgegebenen Kalibrierstellen des Werkstücks selbstkalibrierenden Weggeber auf. Bei den Kalibrierstellen handelt es sich entweder um Strukturelemente des Werkstücks, wie Durchbrüche, Kanten oder Überlappungsstellen, oder um eigens für die Selbstkalibrierung auf dem Werkstück vorgesehene Kalibriermarken oder eine Kalibrierskala.

Die Kameraeinheit kann beispielsweise als Zeilenkamera ausgebildet sein, deren Bildaufnahmezeile quer oder schräg zur Aufnahmebahn ausgerichtet ist. Bevorzugt wird jedoch eine als CCD-Kamera ausgebildete Kameraeinheit vorgesehen, die in rascher Folge zweidimensionale, digital abspeicherbare und auswertbare Rasterbilder erzeugt. Um über die gesamte Auftragsbahn eine lückenlose Bilddarstellung und außerdem eine rasche Fehlererkennung und -behebung zu ermöglichen, wird gemäß einer bevorzugten Ausgestaltung der Erfindung vorgeschlagen, dass mehrere Kameraeinheiten vorgesehen sind.

Weiter ist es von Vorteil, wenn am Düsenkopf oder am zugehörigen Roboterglied eine Beleuchtungseinheit angeordnet ist. Dadurch können die Beleuchtungsverhältnisse entlang der Auftragsbahn konstant gehalten werden.

Eine weitere vorteilhafte Ausgestaltung der Erfindung sieht einen am Düsenkopf oder am zugehörigen Roboterglied angeordneten, auf das Werkstück gerichteten oder über die Auftragsbahn scannenden Abstandssensor zur Bestimmung des Düsenabstands vom Werkstück oder des Dickenprofils des Klebstoffstreifens vor.

Gemäß einer weiteren bevorzugten Ausgestaltung der Erfindung weist die Bildauswerteeinheit einen Sollwertspeicher oder -generator zur Generierung von vorgegebenen Bilddaten entlang der Auftragsbahn auf. Die Sollwert-Bilddaten können dabei beispielsweise an einem Master-Werkstück bei einem Lerndurchlauf (teach in) eingelesen werden. Schließlich weist die erfindungsgemäße Bildauswerteanordnung eine Vergleicherschaltung oder -routine für den Ist-/Sollwertvergleich zumindest eines Teils der Bilddaten entlang der Auftragsbahn auf, deren Differenzausgang Bestandteil eines Regelkreises zur Nachführung der Dosier- und Bahnparameter sein kann. Zu diesem Zweck ist der Dosierkopf über eine Dosiereinrichtung mit Klebstoff beaufschlagbar, während die Bildauswerteeinrichtung und/oder der Abstandssensor Bestandteil eines die Dosiereinrichtung ansteuernden Regelkreises sind.

Vorteilhafterweise weist die Dosiereinrichtung einen Mengenregler zur Einstellung der Klebstoffmenge sowie eine Regel- oder Steuereinrichtung zur Einstellung der Streifenbreite des Klebstoffs entlang der Auftragsbahn auf. Der Mengenregler kann dabei eine Kolbenpumpe mit einem Kolbenwegmesser umfassen, deren Antriebsdruck oder Antriebskraft bei zumindest zeitweilig konstantem Düsenaustrittsquerschnitt variierbar ist. Eine bevorzugte Ausgestaltung der Erfindung sieht vor, daß der Düsenkopf als Wirbelsprühkopf ausgebildet ist, dessen Auftragsdüse zur Abgabe eines zusammenhängenden Klebstofffadens bestimmt ist und der mindestens eine schräg zum austretenden Klebstofffaden weisende Sprühluftdüse aufweist. Zusätzlich ist eine Steuereinrichtung zur Einstellung der Sprühluftzufuhr nach Maßgabe der vorgegebenen Streifenbreite entlang der Auftragsbahn vorgesehen, die mit einem von der Bildauswerteanordnung abgegebenen, aus einer Abweichung der gemessenen von der vorgegebenen Streifenbreite abgeleiteten Nachführsignal beaufschlagbar ist. Alternativ dazu kann der Düsenkopf als Wirbelsprühkopf ausgebildet sein, dessen Auftragsdüse zur Abgabe eines zusammenhängenden Klebstofffadens bestimmt ist und um eine Exzenterachse drehend antreibbar ist. Zusätzlich ist auch hier eine Steuerungseinrichtung zur Einstellung der Düsendrehzahl nach Maßgabe der vorgegebenen Streifenbreite entlang der Auftragsbahn vorgesehen ist, die mit einer von der Bildauswerteanordnung abgegebenen, aus einer Abweichung der gemessenen von der vorgegebenen Streifenbreite abgeleiteten Nachführsignal beaufschlagbar ist. Bei beiden Varianten kann die Steuereinrichtung zur Einstellung der Sprühluftzufuhr oder der Düsendrehzahl eingangsseitig mit Steuerparametern beaufschlagt wird, die aus der vorgegebenen oder gemessenen Klebstoffmenge pro Zeiteinheit und einer viskositätsabhängigen Größe abgeleitet sind. Die viskositätsabhängige Größe kann dabei proportional zum augenblicklichen Antriebsdruck einer als Kolbenpumpe ausgebildeten Dosiervorrichtung sein.

Eine weitere bevorzugte Ausgestaltung der Erfindung sieht vor, daß die Roboteranordnung einen Bahnkurvenspeicher oder -generator zur Vorgabe des Weges und der Geschwindigkeit des Düsenkopfs entlang der Auftragsbahn aufweist.

Vorteilhafterweise ist die Bildauswerteeinheit durch einen Steuercomputer und eine Bildauswertesoftware gebildet. Die Bildauswerteeinheit oder der Steuercomputer können dabei vorzugsweise über ein Online-Netz mit einem externen Computer vernetzt sein. Der externe Computer kann andererseits vorzugsweise über das Online-Netz mit der Steuereinrichtung vernetzt sein. Mit diesen Maßnahmen ist eine Online-Überwachung des Kleberoboters sowie eine Nachführung der Steuer- und Regelparameter von einer externen Überwachungsstelle aus beispielsweise über das Internet möglich. Die lückenlose Bilddarstellung ermöglicht außerdem eine rasche Fehlererkennung und - behebung.

Im folgenden wird die Erfindung anhand der in der Zeichnung dargestellten Ausführungsbeispiele näher erläutert. Es zeigen
- Fig. 1: einen Roboter für die Bördelnahtversiegelung eines Werkstücks in schaubildlicher Darstellung;

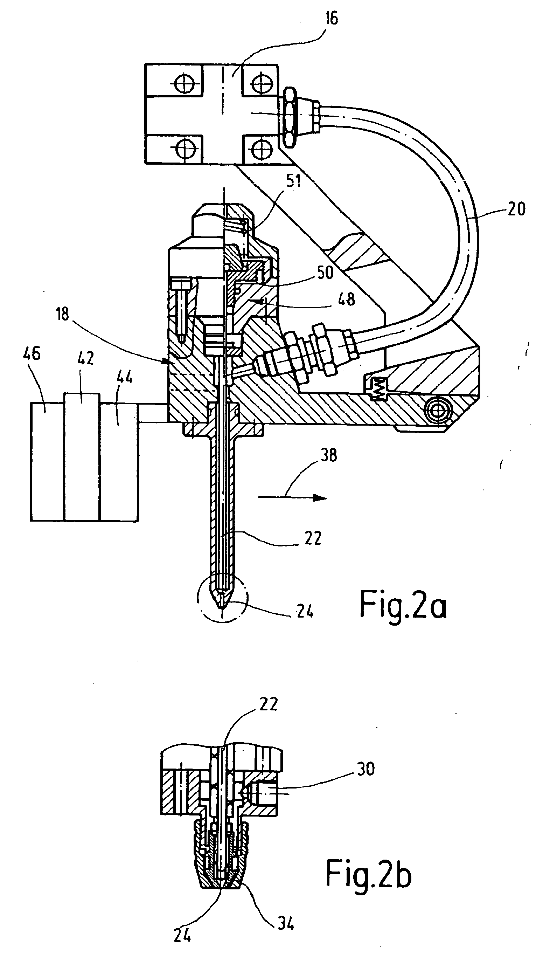

- Fig. 2a: einen Schnitt durch einen am Endglied des Roboters angelenkten Düsenkopf;
- Fig. 2b: einen vergrößerten Ausschnitt aus Fig. 2 a im Bereich der Auftragsdüse;
- Fig. 3: ein Schema einer Steuerungseinrichtung zur Ansteuerung des Düsenkopfes für die Roboteranordnung nach Fig. 1;
- Fig. 4: ein Schema zur Erläuterung des Soll-/Istwert-Vergleichs in der Steuerungseinrichtung nach Fig. 3.

Die in der Zeichnung dargestellte Roboteranordnung 10 ist für den Klebstoffauftrag zur Versiegelung von verklebten Bördelnähten 12 von KFZ-Teilen 14 bestimmt. Der Roboter trägt zu diesem Zweck an seinem Endglied 16 einen Düsenkopf 18, der über einen flexiblen Schlauch 20 mit einem pastösen Klebstoff beaufschlagbar ist und der eine mit einer Ventilnadel 22 verschließbare Auftragsdüse 24 aufweist. Die Betätigung der Ventilnadel 22 erfolgt über eine Zylinder-Kolbenanordnung 48, deren Kolben 50 in die Offenstellung über die Robotersteuerung entgegen der Kraft einer Schließfeder 51 pneumatisch nach oben und in die Schließstellung unter der Einwirkung der Schließfeder 51 nach unten verschoben wird. Der Düsenkopf 18 ist bei dem gezeigten Ausführungsbeispiel als Wirbelsprühkopf ausgebildet, aus dessen Auftragsdüse 24 ein Klebstofffaden 28 austritt, der mit Hilfe von Druckgas ausgelenkt und verwirbelt wird, so daß ein schleifenartig gelegter, partiell offener Klebstoffstreifen 40 definierter Breite auf das Werkstück 14 aufgetragen wird. Zu diesem Zweck weist der Düsenkopf 18 einen Sprühluftanschluß 30 auf, an den eine Sprühluftleitung angeschlossen ist. Die hierüber zugeführte Sprühluft mündet in einen schräg zur Auftragsdüse 24 weisenden Luftaustrittskanal 34.

Der Düsenkopf ist über die Roboteranordnung 10 relativ zum Werkstück 14 entlang einer vorgegebenen Auftragsbahn 36 in Richtung des Pfeils 38 bewegbar und bringt über die Auftragsdüse 24 einen verwirbelten Klebstoffstreifen 40 auf das Werkstück 14 auf.

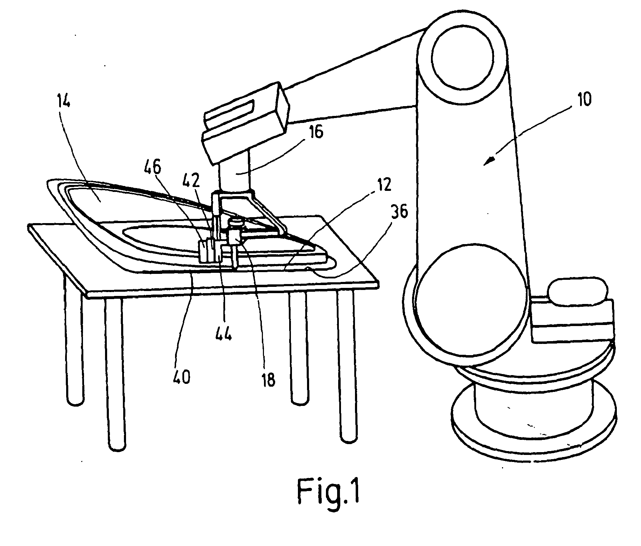

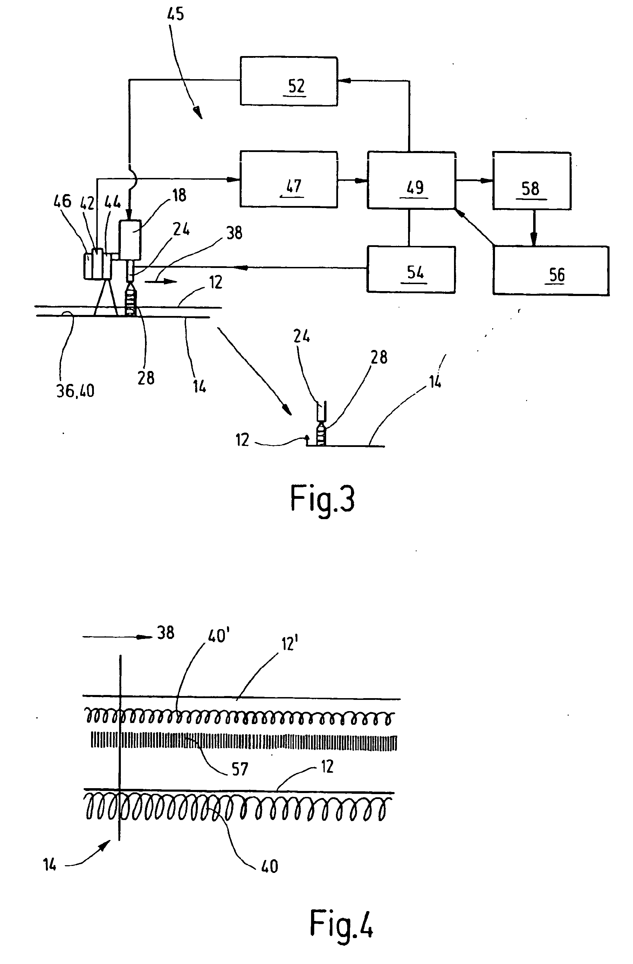

Wie aus Fig. 1 und 3 zu ersehen ist, ist am Endglied 16 des Roboters 10 zusätzlich mindestens eine Kameraeinheit 42 mit Beleuchtungseinrichtung 44 angeordnet, die sich in Bewegungsrichtung 38 hinter dem Düsenkopf 18 befindet, und die die Aufgabe hat, die Ausbringung des Klebstoffstreifens 40 zu überwachen und erforderlichenfalls in einer Bildauswerteeinheit 45 steuerungs- oder regelungstechnisch zu korrigieren.

Weiter ist mit dem Düsenkopf 18 ein Abstandssensor 46 gekoppelt, mit dem der Abstand der Auftragsdüse 24 zum Werkstück 14 als wichtiger Einstellparameter erfaßt und das Dickenprofil und/oder die Breite des Klebstoffstreifens 40 bestimmt werden kann. Der Abstandssensor 46 ,führt dabei nach Art eines Scanners eine quer zur Auftragsbahn verlaufende Pendelbewegung aus. Der Abstandssensor 46 ist beispielsweise als Lasersensor oder als Ultraschallsensor ausgebildet.

Die Meßdaten der Kameraeinheit 42 und des Abstandssensors 46 werden in einen Bilddatenspeicher 47 für die Erfassung der Ist-Daten 40 eingelesen und im Computer 49 zumindest teilweise über eine Vergleicherroutine mit vorgegebenen Sollwert-Daten 40' verglichen. Gemessen werden kann hierbei der Abstand von der Bördelkante 12, 12', die Breite und die Dicke des Klebstoffstreifens 40. Die Vergleichsdaten können dabei umgesetzt werden in Steuerparameter für die Ansteuerung des Dosierers 52 oder der Sprühluftzufuhr 54. Als Steuerparameter kommen in Betracht die Vorschubgeschwindigkeit des Düsenkopfes 18, der Antriebsdruck im Dosierer 52, der Sprühluftdruck bei der Sprühluftzufuhr 54 oder der Abstand der Auftragsdüse 24 vom Werkstück 14. Wegen der hohen Auftragsgeschwindigkeit ist eine sehr schnelle Kamera 42 nötig. Ebenso wichtig ist eine gute und konstante Ausleuchtung über die Beleuchtungseinheit 44. Zweckmäßig wird jedes einzelne Kamerabild über einen Lichtblitz der als Diodenblitz ausgebildeten Beleuchtungseinheit 44 belichtet. Die Wegmessung entlang der Auftragsbahn 36 erfolgt zweckmäßig über einen Weggeber oder eine Wegskala 57, die durch werkstückfeste Referenzpunkte, wie Referenzbohrungen, Kanten, Abknickungen oder Ausklinkungen justiert und interpoliert werden kann. Mit diesen Maßnahmen kann bei Bedarf auch die vorgegebene Auftragsbahn 36 über die Robotersteuerung den Meßwerten entsprechend korrigiert werden.

Die Überwachung des Klebstoffstreifens mit der schnelllaufenden Videokamera 42 erleichtert sowohl die Einstellarbeit der Roboteranordnung 10 und des Dosiersystems 52,54 als auch deren Nachführung bei Störungen, wie Materialwechsel, Temperaturschwankungen oder Eingriff in die ursprünglichen Einstellparameter. Von besonderem Vorteil ist dabei, daß die Einstellund Nachführungsvorgänge auch über externe Computer 56, beispielsweise von einer Servicestelle aus unter Verwendung eines Online-Netzes 58, wie das Internet durchgeführt werden können.

Zusammenfassend ist folgendes festzuhalten: Die Erfindung bezieht sich auf einen Kleberoboter mit einer Anordnung zum Aufbringen von Klebstoff auf ein Werkstück. Der Kleberoboter weist einen mit dem viskosen Klebstoff unter Druck beaufschlagbaren, eine Auftragsdüse 24 aufweisenden Düsenkopf 18 auf, wobei der Düsenkopf 18 und das Werkstück 14 relativ zueinander bewegbar sind. Der in einem Sprühstrahl 28 aus der Auftragsdüse 24 austretende Klebstoff wird in Form eines Klebstoffstreifens 40 entlang einer vorgegebenen Auftragsbahn 36 auf das Werkstück 14 appliziert. Um die Einstellarbeit und das Nachkalibrieren zu erleichtern, ist mindestens eine am Düsenkopf 18 angeordnete, mit ihrem Objektiv auf den Sprühstrahl 28 oder den Klebstoffstreifen 40 gerichtete Kameraeinheit 42 vorgesehen, die ausgangsseitig an eine Bildauswerteeinheit 45 angeschlossen ist. Die über die Kameraeinheit 42 erfaßten Bilddaten 40 werden zwischengespeichert und mit vorgegebenen Bildwerten 40' verglichen. Aufgrund der entlang der Auftragsbahn 36 ermittelten Abweichungen in den Bildwerten ist eine Kalibrierung und Nachführung der maßgeblichen Steuerparameter des Systems automatisch oder über eine Fernbedienung möglich.

## Patentansprüche

1. Einrichtung zum Aufbringen von Klebstoff auf ein Werkstück mit einem mit dem viskosen Klebstoff unter Druck beaufschlagbaren, eine Auftragsdüse (24) aufweisenden Düsenkopf (18), wobei der Düsenkopf (18) und das Werkstück (14) mittels einer Roboteranordnung (10) so relativ zueinander bewegbar sind, dass der vorzugsweise in einem Sprühstrahl aus der Auftragsdüse (24) austretende Klebstoff in Form eines Klebstoffstreifens (40) entlang einer vorgegebenen Auftragsbahn (36) auf das Werkstück (14) applizierbar ist, und wobei am Düsenkopf (18) oder am zugehörigen Roboterglied eine mit ihrem Objektiv auf den Sprühstrahl (28) oder den Klebstoffstreifen (40) gerichtete, ausgangsseitig an eine Bildauswerteeinheit (45) angeschlossene Kameraeinheit (42) zur Erzeugung von Bilddaten des Klebstreifens (40) angeordnet ist, **dadurch gekennzeichnet, dass** die Bildauswerteeinheit (45) einen Istwert-Speicher (47) zur fortlaufenden Abspeicherung der gemessenen Bilddaten sowie einen mit dem Istwert-Speicher synchronisierbaren Impulsgeber oder Weggeber (57) entlang der Auftragsbahn (36) aufweist.

2. Einrichtung nach Anspruch 1, **dadurch gekennzeichnet, dass** die Kameraeinheit (42) als Zeilenkamera ausgebildet ist, deren Bildaufnahmezeile quer oder schräg zur Auftragsbahn (36) ausgerichtet ist.

3. Einrichtung nach Anspruch 1, **dadurch gekennzeichnet, dass** die Kameraeinheit (42) als Videokamera, insbesondere als CCD-Kamera ausgebildet ist.

4. Einrichtung nach Anspruch 1, **dadurch gekennzeichnet, dass** die Kameraeinheit (42) als Infrarot-Kamera ausgebildet ist.

5. Einrichtung nach einer der Ansprüche 1 bis 4, **gekennzeichnet durch** eine am Düsenkopf (18) oder am zugehörigen Roboterglied (16) angeordnete Beleuchtungseinheit (44).

6. Einrichtung nach einem der Ansprüche 1 bis 5, **gekennzeichnet durch** einen am Düsenkopf (18) oder am zugehörigen Roboterglied (16) angeordneten, auf das Werkstück (14) gerichteten und vorzugsweise über die Auftragsbahn (36) scannenden Abstandssensor (46).

7. Einrichtung nach einem der Ansprüche 1 bis 6, **dadurch gekennzeichnet, dass** die Bildauswerteeinheit (47) einen an vorgegebenen Kalibrierstellen des Werkstücks (14) selbstkalibrierenden Impuls- oder Weggeber aufweist.

8. Einrichtung nach einem der Ansprüche 1 bis 7, **dadurch gekennzeichnet, dass** die Bildauswerteeinheit einen Sollwert-Speicher oder -Generator zur Generierung von vorgegebenen Bilddaten (40') entlang der Auftragsbahn (36) aufweist.

9. Einrichtung nach Anspruch 8, **dadurch gekennzeichnet, dass** die Sollwert-Bilddaten (40') in einem Lerndurchlauf generierbar sind.

10. Einrichtung nach einem der Ansprüche 1 bis 9, **dadurch gekennzeichnet, dass** die Bildauswerteeinheit (45) eine Vergleichsschaltung oder -routine für den Ist-/Sollwert-Vergleich zumindest eines Teils der Bilddaten (40, 40') entlang der Auftragsbahn (36) aufweist.

11. Einrichtung nach einem der Ansprüche 1 bis 9, **dadurch gekennzeichnet, dass** der Düsenkopf (18) über eine Dosiereinrichtung (52) mit Klebstoff beaufschlagbar ist und dass die Bildauswerteeinheit (45) Bestandteil eines die Dosiereinrichtung (52,54) ansteuernden Regelkreises ist.

12. Einrichtung nach Anspruch 11, **dadurch gekennzeichnet, dass** die Dosiereinrichtung (52) einen Mengenregler zur Einstellung des Klebstoffflusses sowie eine Regel- oder Steuereinrichtung (54) zur Einstellung der Streifenbreite des Klebstoffs entlang der Auftragsbahn (36) aufweist.

13. Einrichtung nach einem der Ansprüche 1 bis 12, **dadurch gekennzeichnet, dass** die Roboteranordnung (10) einen Bahnkurvenspeicher oder -generator zur Einstellung des Wegs und der Geschwindigkeit des Dosierkopfs (18) entlang der vorgegebenen Auftragsbahn (36) aufweist.

14. Einrichtung nach Anspruch 12 oder 13, **dadurch gekennzeichnet, dass** der Mengenregler eine Kolbenpumpe mit einem Kolbenhubmesser umfasst, deren Antriebsdruck oder -kraft bei zumindest zeitweilig konstantem Auftragsdüsenquerschnitt variabel ist.

15. Einrichtung nach einem der Ansprüche 1 bis 14, **dadurch gekennzeichnet, dass** der Düsenkopf (18) über einen Druckregler (52) mit Klebstoff beaufschlagbar ist und dass die Bildauswerteeinheit (45) Bestandteil eines den Druckregler (52,54) ansteuernden Regelkreises sind.

16. Einrichtung nach einem der Ansprüche 1 bis 15, **dadurch gekennzeichnet, dass** der Düsenkopf (18) als Wirbelsprühkopf ausgebildet ist, dessen Auftragsdüse zur Abgabe eines zusammenhängenden Klebstofffadens (28) bestimmt ist, und der mindestens einen schräg zur Auftragsdüse (24) weisenden Sprühluftkanal (34) aufweist, und dass eine Steuerungseinrichtung (54) zur Einstellung der Sprühluftzufuhr nach Maßgabe der vorgegebenen Streifenbreite entlang der Auftragsbahn (36) vorgesehen ist, die mit einem von der Bildauswerteeinheit (45) abgegebenen, aus einer Abweichung der gemessenen von der vorgegebenen Streifenbreite abgeleiteten Nachführsignal beaufschlagbar ist.

17. Einrichtung nach einem der Ansprüche 1 bis 16, **dadurch gekennzeichnet, dass** der Düsenkopf (18) als Wirbelsprühkopf ausgebildet ist, dessen Auftragsdüse (24) zur Abgabe eines zusammenhängenden Klebstofffadens (28) besteht und um eine Exzenterachse drehend antreibbar ist, und dass eine Steuerungseinrichtung zur Einstellung der Düsendrehzahl nach Maßgabe der vorgegebenen Streifenbreite entlang der Auftragsbahn (36) vorgesehen ist, die mit einem von der Bildauswerteeinheit (45) abgegebenen, aus einer Abweichung der gemessenen von der vorgegebenen Streifenbreite abgeleiteten Nachführsignal beaufschlagbar ist.

18. Einrichtung nach Anspruch 16 oder 17, **dadurch gekennzeichnet, dass** die Steuerungseinrichtung (54) zur Einstellung der Sprühluftzufuhr oder der Düsendrehzahl eingangsseitig mit Steuerparametern beaufschlagt ist, die aus der vorgegebenen oder gemessenen Klebstoffmenge pro Zeiteinheit und/oder einer viskositätsabhängigen Größe abgeleitet sind.

19. Einrichtung nach Anspruch 18, **dadurch gekennzeichnet, dass** die viskositätsabhängige Größe proportional zum momentanen Antriebsdruck einer als Kolbenpumpe ausgebildeten Dosiervorrichtung (54) ist.

20. Einrichtung nach einem der Ansprüche 1 bis 19, **dadurch gekennzeichnet, dass** die Bildauswerteeinheit (45) durch einen Steuercomputer (49) und eine Bildauswertesoftware gebildet ist.

21. Einrichtung nach Anspruch 20, **dadurch gekennzeichnet, dass** die Bildauswerteeinheit oder der Steuercomputer (49) vorzugsweise über ein Online-Netz (58) mit einem externen Computer (56) vernetzt ist.

22. Einrichtung nach Anspruch 21, **dadurch gekennzeichnet, dass** der externe Computer (56) vorzugsweise über das Online-Netz mit der Steuereinrichtung (52,54) vernetzt ist.

23. Einrichtung nach einem der Ansprüche 1 bis 22, **dadurch gekennzeichnet, dass** mehrere mit ihrem Objektiv auf den Sprühstrahl (28) oder den Klebstoffstreifen (40) gerichtete Kameraeinheiten (42) vorgesehen sind.

## Claims

1. Device for applying adhesive to a workpiece, comprising a nozzle head (18) which has an application nozzle (24) and can be acted on by a pressurised viscous adhesive, the nozzle head (18) and the workpiece (14) being movable relative to one another by means of a robotic assembly (10) in such a way that the adhesive, which issues from the application nozzle (24) preferably as a spray jet, can be applied to the workpiece (14) along a predetermined application path (36) in the form of a strip of adhesive (40), and a camera unit (42), which is connected on the output side to an image evaluation unit (45) and the lens of which is directed toward the spray jet (28) or the adhesive strip (40), being arranged on the nozzle head (18) or on the associated robotic member for generating image data of the adhesive strip (40), **characterised in that** the image evaluation unit (45) has an actual value memory (47) for continuous storage of the measured image data as well as a pulse generator or route provider (57), which can be synchronised with the actual value memory, along the application path (36).

2. Device according to claim 1, **characterised in that** the camera unit (42) is configured as a line camera, the image recording line of which is oriented transversely or obliquely to the application path (36).

3. Device according to claim 1, **characterised in that** the camera unit (42) is configured as a video camera, in particular as a CCD camera.

4. Device according to claim 1, **characterised in that** the camera unit (42) is configured as an infrared camera.

5. Device according to any one of claims 1 to 4, **characterised by** an illumination unit (44) arranged on the nozzle head (18) or on the associated robotic member (16).

6. Device according to any one of claims 1 to 5, **characterised by** a distance sensor (46) which is arranged on the nozzle head (18) or on the associated robotic member (16), is directed toward the workpiece (14) and preferably scans over the application path (36).

7. Device according to any one of claims 1 to 6, **characterised in that** the image evaluation unit (47) has a pulse generator or route provider which self-calibrates at predetermined calibration points of the workpiece (14).

8. Device according to any one of claims 1 to 7, **characterised in that** the image evaluation unit has a desired value memory or generator for generating predetermined image data (40') along the application path (36).

9. Device according to claim 8, **characterised in that** the desired value image data (40') can be generated in a teaching run.

10. Device according to any one of claims 1 to 9, **characterised in that** the image evaluation unit (45) has a comparison circuit or routine for comparing the actual/desired values of at least a portion of the image data (40, 40') along the application path (36).

11. Device according to any one of claims 1 to 9, **characterised in that** the nozzle head (18) can be acted on by adhesive via a metering device (52) and **in that** the image evaluation unit (45) is part of a control loop activating the metering device (52, 54).

12. Device according to claim 11, **characterised in that** the metering device (52) has a volume regulator for adjusting the flow of adhesive as well as an open or closed-loop control device (54) for adjusting the strip width of the adhesive along the application path (36).

13. Device according to any one of claims 1 to 12, **characterised in that** the robotic assembly (10) has a path curve memory or generator for adjusting the route and the speed of the metering head (18) along the predetermined application path (36).

14. Device according to either claim 12 or claim 13, **characterised in that** the volume regulator comprises a piston pump with a piston stroke measuring device, the drive pressure or force of which is variable in the case of an at least temporarily constant application nozzle cross section.

15. Device according to any one of claims 1 to 14, **characterised in that** the nozzle head (18) can be acted on by adhesive via a pressure regulator (52) and **in that** the image evaluation unit (45) is part of a control loop activating the pressure regulator (52, 54).

16. Device according to any one of claims 1 to 15, **characterised in that** the nozzle head (18) is configured as a cyclone spray head, the application nozzle of which is intended to emit a cohesive thread of adhesive (28) and which has at least one spray air channel (34) pointing obliquely to the application nozzle (24) and **in that** a control device (54) is provided for adjusting the supply of spray air in accordance with the predetermined strip width along the application path (36) which can be acted on by a resetting signal derived from the deviation of the measured from the predetermined strip width.

17. Device according to any one of claims 1 to 16, **characterised in that** the nozzle head (18) is configured as a cyclone spray head, the application nozzle (24) of which is for emitting a coherent thread of adhesive (28) and can be driven in rotation about an eccentric axis, and **in that** a control device is provided for adjusting the rotational speed of the nozzle in accordance with the predetermined strip width along the application path (36) which can be acted on by a resetting signal which is emitted by the image evaluation unit (45) and derived from the deviation of the measured from the predetermined strip width.

18. Device according to either claim 16 or claim 17, **characterised in that** the control device (54) for adjusting the supply of spray air or the rotational speed of the nozzle is acted on on the input side by control parameters derived from the predetermined or measured amount of adhesive per unit of time and/or a viscosity-dependent variable.

19. Device according to claim 18, **characterised in that** the viscosity-dependent variable is proportional to the instantaneous drive pressure of a metering device (54) configured as a piston pump.

20. Device according to any one of claims 1 to 19, **characterised in that** the image evaluation unit (45) is formed by a control computer (49) and image evaluation software.

21. Device according to claim 20, **characterised in that** the image evaluation unit or the control computer (49) is networked with an external computer (56), preferably via an on-line network (58).

22. Device according to claim 21, **characterised in that** the external computer (56) is networked with the control device (52, 54), preferably via the on-line network.

23. Device according to any one of claims 1 to 22, **characterised in that** a plurality of camera units (42), the lens of which is directed toward the spray jet (28) or the adhesive strip (40), are provided.

## Revendications

1. Dispositif pour l'application de colle sur une pièce, comprenant une tête de buse (18) qui présente une buse d'application (24) et peut être alimentée en colle visqueuse sous pression, la tête de buse (18) et la pièce (14) étant déplaçables l'une par rapport à l'autre au moyen d'un système robotique (10) de façon que la colle sortant de la buse d'application (24) de préférence en un jet de pulvérisation soit appliquée sur la pièce (14) sous la forme d'une bande de colle (40) le long d'un parcours d'application (36) prédéfini, une unité de caméra (42) pour générer des données d'image de la bande de colle (40) étant disposée sur la tête de buse (18) ou sur l'élément robotique associé, dont l'objectif est dirigé vers le jet de pulvérisation (28) ou la bande de colle (40) et qui est connectée côté sortie à une unité d'évaluation d'images (45), **caractérisé en ce que** l'unité d'évaluation d'images (45) présente une mémoire de valeurs réelles (47) pour la mémorisation continue des données d'image mesurées ainsi qu'un transmetteur d'impulsions ou de déplacement (57) le long du parcours d'application (36), qui peut être synchronisé avec la mémoire de valeurs réelles.

2. Dispositif selon la revendication 1, **caractérisé en ce que** l'unité de caméra (42) est réalisée sous forme de caméra linéaire dont la ligne de prise de vues est orientée transversalement ou obliquement par rapport au parcours d'application (36).

3. Dispositif selon la revendication 1, **caractérisé en ce que** l'unité de caméra (42) est réalisée sous forme de caméra vidéo, en particulier sous forme de caméra CCD.

4. Dispositif selon la revendication 1, **caractérisé en ce que** l'unité de caméra (42) est réalisée sous forme de caméra infrarouge.

5. Dispositif selon l'une des revendications 1 à 4, **caractérisé par** une unité d'éclairage (44) disposée sur la tête de buse (18) ou sur l'élément robotique (16) associé.

6. Dispositif selon l'une des revendications 1 à 5, **caractérisé par** un capteur de distance (46) disposé sur la tête de buse (18) ou sur l'élément robotique (16) associé, dirigé vers la pièce (14) et de préférence balayant le parcours d'application (36).

7. Dispositif selon l'une des revendications 1 à 6, **caractérisé en ce que** l'unité d'évaluation d'images (47) présente un transmetteur d'impulsions ou de déplacement auto-calibrant à des points de calibrage prédéfinis de la pièce (14).

8. Dispositif selon l'une des revendications 1 à 7, **caractérisé en ce que** l'unité d'évaluation d'images présente une mémoire ou un générateur de valeurs de consigne pour générer des données d'image prédéfinies (40') le long du parcours d'application (36).

9. Dispositif selon la revendication 8, **caractérisé en ce que** les données d'image de consigne (40') peuvent être générées lors d'un passage d'apprentissage.

10. Dispositif selon l'une des revendications 1 à 9, **caractérisé en ce que** l'unité d'évaluation d'images (45) présente un circuit ou une routine de comparaison pour la comparaison valeurs réelles/valeurs de consigne d'au moins une partie des données d'image prédéfinies (40, 40') le long du parcours d'application (36).

11. Dispositif selon l'une des revendications 1 à 9, **caractérisé en ce que** la tête de buse (18) peut être alimentée en colle par l'intermédiaire d'un dispositif de dosage (52) et que l'unité d'évaluation d'images (45) fait partie d'un circuit de régulation qui commande le dispositif de dosage (52, 54).

12. Dispositif selon la revendication 11, **caractérisé en ce que** le dispositif de dosage (52) présente un régulateur de débit pour régler le flux de colle ainsi qu'un dispositif de régulation ou de commande (54) pour régler la largeur de bande de la colle le long du parcours d'application (36).

13. Dispositif selon l'une des revendications 1 à 12, **caractérisé en ce que** le système robotique (10) présente une mémoire ou un générateur de trajectoires pour régler le trajet et la vitesse de la tête de buse (18) le long du parcours d'application (36).

14. Dispositif selon la revendication 12 ou 13, **caractérisé en ce que** le régulateur de débit comprend une pompe à piston avec un dispositif de mesure de la course de piston, dont la pression ou la force d'entraînement est variable à section de buse d'application au moins temporairement constante.

15. Dispositif selon l'une des revendications 1 à 14, **caractérisé en ce que** la tête de buse (18) peut être alimentée en colle par l'intermédiaire d'un régulateur de pression (52) et que l'unité d'évaluation d'images (45) fait partie d'un circuit de régulation qui commande le régulateur de pression (52, 54).

16. Dispositif selon l'une des revendications 1 à 15, **caractérisé en ce que** la tête de buse (18) est réalisée sous forme de tête de pulvérisation à turbulence dont la buse d'application est conçue pour délivrer un fil de colle continu (28) et qui présente au moins un canal d'air de pulvérisation (34) dirigé obliquement par rapport à la buse d'application (24), et qu'il est prévu un dispositif de commande (54) pour régler l'amenée d'air de pulvérisation en fonction de la largeur de bande prédéfinie le long du parcours d'application (36), auquel peut être appliqué un signal d'asservissement délivré par l'unité d'évaluation d'images (45), dérivé d'un écart entre la largeur de bande mesurée et celle prédéfinie.

17. Dispositif selon l'une des revendications 1 à 16, **caractérisé en ce que** la tête de buse (18) est réalisée sous forme de tête de pulvérisation à turbulence dont la buse d'application est conçue pour délivrer un fil de colle continu (28) et peut être entraînée en rotation autour d'un axe excentré, et qu'il est prévu un dispositif de commande pour régler la vitesse de rotation de la buse en fonction de la largeur de bande prédéfinie le long du parcours d'application (36), auquel peut être appliqué un signal d'asservissement délivré par l'unité d'évaluation d'images (45), dérivé d'un écart entre la largeur de bande mesurée et celle prédéfinie.

18. Dispositif selon la revendication 16 ou 17, **caractérisé en ce que** le dispositif de commande (54) pour régler l'amenée d'air de pulvérisation ou la vitesse de rotation de la buse est soumis côté entrée à des paramètres de commande qui sont dérivés de la quantité de colle prédéfinie ou mesurée par unité de temps et/ou d'une grandeur dépendante de la viscosité.

19. Dispositif selon la revendication 18, **caractérisé en ce que** la grandeur dépendante de la viscosité est proportionnelle à la pression d'entraînement momentanée d'un dispositif de dosage (54) réalisé sous forme de pompe à piston.

20. Dispositif selon l'une des revendications 1 à 19, **caractérisé en ce que** l'unité d'évaluation d'images (45) est formée par un ordinateur de commande (49) et un logiciel d'évaluation d'images.

21. Dispositif selon la revendication 20, **caractérisé en ce que** l'unité d'évaluation d'images ou l'ordinateur de commande (49) est de préférence connecté(e) en réseau avec un ordinateur externe (56) par l'intermédiaire d'un réseau en ligne (58).

22. Dispositif selon la revendication 21, **caractérisé en ce que** l'ordinateur externe (56) est de préférence connecté en réseau avec le dispositif de commande (52, 54) par l'intermédiaire du réseau en ligne.

23. Dispositif selon l'une des revendications 1 à 22, **caractérisé en ce qu'**il est prévu plusieurs unités de caméra (42) dont l'objectif est dirigé vers le jet de pulvérisation (28) ou la bande de colle (40).
